# EUROPEAN PATENT APPLICATION

(11) **EP 4 456 635 A1**
(43) Date of publication of application: **30.10.2024**
(21) Application number: 22910058.1
(22) Date of filing: 21.12.2022
(51) Int. Cl.: H04W 72/04

(54) **BEAM DETERMINATION METHOD AND APPARATUS**

(30) Priority: 24.12.2021 CN 202111607484
(71) Applicant: Beijing Unisoc Communications Technology Co., Ltd., Beijing 100083 (CN)
(72) Inventor: MA, Dawei, Beijing 100083 (CN)
(74) Representative: Mewburn Ellis LLP
(86) International application number: PCT/CN2022/140595
(87) International publication number: WO 2023/116746

(57) **Abstract**

Methods and devices for beam determination are provided in the disclosure, which are applied to the field of communication technology. The method includes: a terminal device receives first indication information from an access network device, determines multiple first beams according to the first indication information, and determines a second beam from the multiple first beams. The multiple first beams are used for transmitting a first signal, and a transmission mode of the first signal is a multiple transmission reception point (TRP) mode. The second beam is used for transmitting a second signal, and a transmission mode of the second signal is a single TRP mode. A beam of the second signal transmitted by a single TRP in a multiple TRP scenario can be determined, which is beneficial to improving reliability of signal transmission.

## Description

### TECHNICAL FIELD

This application relates to the field of communication technology, and particularly to methods and devices for beam determination.

### BACKGROUND

Based on the 3rd generation partnership project (3GPP) new radio (NR) protocol, an access network device and a terminal device can determine appropriate transmitting and receiving beams through a beam training process. Signal transmission and reception with appropriate transmitting and receiving beams can improve reliability of transmission of uplink and downlink signals. In an NR system of Release 17 (Rel-17), transmitting and receiving beams of uplink and downlink data channels, uplink and downlink control channels, and some reference signals can be indicated uniformly through a beam configuration framework. In the actual deployment environment, for uplink and downlink data channels, uplink and downlink control channels, and some reference signals, both the access network device and the terminal device can use the same direction of transmitting and receiving beams for signal transmission.

In a multiple transmission reception point (TRP) scenario, an access network device can configure some signals to be transmitted by multiple TRPs and other signals to be transmitted by a single TRP. In the uniformly indicated beam configuration framework, a base station indicates a transmitting beam for each TRP. In this case, transmitting beams of a signal to be transmitted by multiple TRPs are indicated multiple beams. However, a transmitting beam of a signal to be transmitted by a single TRP cannot be determined directly. If the problem of a transmitting beam of a signal to be transmitted by a single TRP is not solved, it may lead to the inability to use appropriate transmitting and receiving beams for corresponding signal transmission and reception between the access network device and the terminal device, further resulting in low reliability of transmission of uplink and downlink signals.

### SUMMARY

The disclosure provides methods and devices for beam determination, so that beams of a first signal transmitted in a multiple transmission reception point (TRP) mode and a beam of a second signal transmitted in a single TRP mode in a multiple TRP scenario can be determined, which is beneficial to improving reliability of signal transmission.

In a first aspect, embodiments of the disclosure provide a method for beam determination. The method is applied to a terminal device and includes: receiving first indication information from an access network device; determining a plurality of first beams according to the first indication information; and determining a second beam from the plurality of first beams; the plurality of first beams being used for transmitting a first signal, and a transmission mode of the first signal being a multiple TRP mode; the second beam being used for transmitting a second signal, and a transmission mode of the second signal being a single TRP mode.

In an optional embodiment, determining the second beam from the plurality of first beams includes: determining a beam corresponding to an index of a preset position among the plurality of first beams as the second beam.

In an optional embodiment, determining the second beam from the plurality of first beams includes: determining a TRP index associated with the second signal; and determining a beam corresponding to the TRP index among the plurality of first beams as the second beam.

In an optional embodiment, the TRP index is an index of a TRP for sending the second signal; or, the TRP index is an index of a TRP for sending a downlink control signal, and the downlink control signal is used for scheduling the second signal.

In a second aspect, embodiments of the disclosure provide another method for beam determination. The method is applied to an access network device and includes: determining a plurality of first beams; and sending first indication information to a terminal device, the first indication information being used for determining the plurality of first beams; the plurality of first beams being used for transmitting a first signal, and a transmission mode of the first signal being a multiple TRP mode; the plurality of first beams including a second beam, the second beam being used for transmitting a second signal, and a transmission mode of the second signal being a single TRP mode.

In an optional embodiment, the second beam is a beam corresponding to an index of a preset position among the plurality of first beams.

In an optional embodiment, the second beam is a beam corresponding to a TRP index among the plurality of first beams, and the TRP index is associated with the second signal.

In an optional embodiment, the TRP index is an index of a TRP for sending the second signal; or the TRP index is an index of a TRP for sending a downlink control signal, and the downlink control signal is used for scheduling the second signal.

In a third aspect, embodiments of the disclosure provide another method for beam determination. The method is applied to a terminal device and includes: receiving first indication information from an access network device; determining a plurality of first beams according to the first indication information; receiving second indication information from the access network device; and determining a second beam according to the second indication information; the plurality of first beams being used for transmitting a first signal, and a transmission mode of the first signal being a multiple TRP mode; the second beam being used for transmitting a second signal, and a transmission mode of the second signal being a single TRP mode.

In a fourth aspect, embodiments of the disclosure provide another method for beam determination. The method is applied to an access network device and includes: sending first indication information to a terminal device, the first indication information being used for determining a plurality of first beams; and sending second indication information to the terminal device, the second indication information being used for determining a second beam; the plurality of first beams being used for transmitting a first signal, and a transmission mode of the first signal being a multiple TRP mode; the second beam being used for transmitting a second signal, and a transmission mode of the second signal being a single TRP mode.

In a fifth aspect, embodiments of the disclosure provide a system for beam determination. The system includes a terminal device and an access network device. The terminal device is configured to execute the method in the first aspect, and the access network device is configured to execute the method in the second aspect; alternatively, the terminal device is configured to execute the method in the third aspect, and the access network device is configured to execute the method in the fourth aspect.

In a sixth aspect, embodiments of the disclosure provide a device for beam determination. The device includes a unit configured to implement the method in any of the first aspect to the fourth aspect.

In a seventh aspect, embodiments of the disclosure provide another device for beam determination. The device includes a processor configured to execute the method in any of the first aspect to the fourth aspect.

In an optional embodiment, the device for beam determination further includes a memory. The memory is used to store computer programs. The processor is specifically configured to call the computer programs from the memory to execute the method in any of the first aspect to the fourth aspect.

In an eighth aspect, embodiments of the disclosure provide a chip. The chip is configured to execute the method in any of the first aspect to the fourth aspect.

In a ninth aspect, embodiments of the disclosure provide a chip module. The chip module includes a communication interface and a chip. The communication interface is configured for internal communication of the chip module, or for the chip module to communicate with an external device. The chip is configured to execute the method in any of the first aspect to the fourth aspect.

In a tenth aspect, embodiments of the disclosure provide a computer-readable storage medium. The computer-readable storage medium stores computer programs. The computer programs include program instructions which, when executed by a processor, are operable with the processor to execute the method in any of the first aspect to the fourth aspect.

In an eleventh aspect, embodiments of the disclosure provide a computer program product. The computer program product includes computer programs or instructions which, when executed by a computer, are operable with the computer to execute the method described in any of the first aspect to the fourth aspect.

### BRIEF DESCRIPTION OF THE DRAWINGS

FIG. 1 is a schematic architecture diagram illustrating a communication system provided in embodiments of the disclosure.
FIG. 2 is a schematic flowchart illustrating a method for beam determination provided in embodiments of the disclosure.
FIG. 3 is a schematic flowchart illustrating another method for beam determination provided in embodiments of the disclosure.
FIG. 4 is a schematic structural diagram illustrating a device for beam determination provided in embodiments of the disclosure.
FIG. 5 is a schematic structural diagram illustrating another device for beam determination provided in embodiments of the disclosure.
FIG. 6 is a schematic structural diagram illustrating another device for beam determination provided in embodiments of the disclosure.
FIG. 7 is a schematic structural diagram illustrating a chip module provided in embodiments of the disclosure.

### DETAILED DESCRIPTION

Hereinafter, technical solutions of embodiments of the disclosure will be described clearly and completely with reference to accompanying drawings in the embodiments. Apparently, embodiments described below are merely some embodiments, rather than all embodiments of the disclosure. All other embodiments obtained by those of ordinary skill in the art based on the embodiments without creative efforts shall fall within the protection scope of the disclosure.

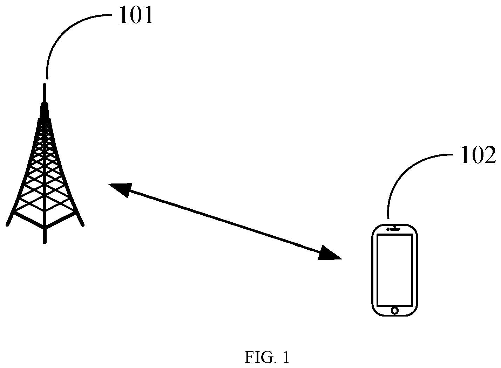

Referring to FIG. 1, FIG. 1 is a schematic architecture diagram illustrating a communication system provided in embodiments of the disclosure. The communication system may include, but is not limited to, an access network device and a terminal device. The number and form of devices illustrated in FIG. 1 are exemplary and do not constitute a limitation on embodiments of the disclosure. In actual applications, the system may include two or more access network devices and two or more terminal devices. The communication system illustrated in FIG. 1 for example includes an access network device 101 and a terminal device 102.

The terminal device of embodiments of the disclosure is a device with a wireless transceiver function, and can also be referred to as a terminal, user equipment (UE), a mobile station (MS), a mobile terminal (MT), an access terminal device, a vehicle-mounted terminal device, an industrial control terminal device, a UE unit, a UE station, a mobile station, a remote station, a remote terminal device, a mobile device, a UE terminal device, a wireless communication device, a UE agent or UE device, etc. The terminal device herein may be fixed or mobile. It is to be noted that, the terminal device herein can support at least one wireless communication technology, such as long time evolution (LTE), new radio (NR), wideband code division multiple access (WCDMA), etc. Exemplarily, the terminal device may be a mobile phone, a pad, a desktop computer, a laptop computer, an all-in-one computer, a vehicle-mounted terminal, a virtual reality (VR) terminal device, an augmented reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device with a wireless communication function, a computing device or other processing device connected to a wireless modem, a wearable device, a terminal device in a future mobile communication network, or a terminal device in a future evolved public land mobile network (PLMN), etc. In some embodiments of the disclosure, the terminal device may also be a device with a transceiver function, such as a chip module. The chip module may include a chip, and may further include other discrete devices. The specific technology and specific form of the terminal device are not limited in embodiments of the disclosure.

In embodiments of the disclosure, the access network device may be a device that provides a wireless communication function for the terminal device, and can also be referred to as a radio access network (RAN) device, etc. The access network device can support at least one wireless communication technology, such as LTE, NR, WCDMA, etc. Exemplarily, the access network device includes, but is not limited to, a next generation node B (gNB) in the 5th generation (5G) mobile communication system, an evolved node B (eNB), a radio network controller (RNC), a node B (NB), a base station controller (BSC), a base transceiver station (BTS), a home base station (e.g., a home evolved node B, or a home node B, HNB), a baseband unit (BBU), a transmission reception point (TRP), a transmitting point (TP), a mobile switching center, etc. The access network device may also be a wireless controller, a centralized unit (CU), and/or a distributed unit (DU) in a cloud radio access network (CRAN) scenario, or the access network device may be a relay station, an access point, a vehicle-mounted device, a terminal device, a wearable device, and an access network device in future mobile communication or an access network device in a future evolved PLMN, etc. In some embodiments, the access network device may also be a device that provides a wireless communication function for the terminal device, such as a chip module. For example, the chip module may include a chip, and may further include other discrete devices. The specific technology and specific form of the access network device are not limited in embodiments of the disclosure.

It is to be noted that, technical solutions of embodiments of the disclosure can be applied to various communication systems, such as an LTE communication system, a 4th generation (4G) mobile communication system, a 5G mobile communication system, a 5G NR system. Optionally, the method of embodiments of the disclosure is also applicable to various future communication systems, such as a 6th generation (6G) system or other communication networks.

It can be understood that, the communication system in embodiments of the disclosure is for more clearly illustrating the technical solutions of the embodiments of the disclosure, and does not constitute a limitation on the technical solutions of the embodiment of the disclosure. Those skilled in the art can know that with evolution of the system architecture and emergence of new business scenarios, the technical solutions of the embodiments of the disclosure is also applicable to a similar technical problem.

In the disclosure, a transmission mode of a signal includes a multiple TRP mode and a single TRP mode. The multiple TRP mode herein refers to a transmission mode in which a signal is sent and/or received through multiple TRPs, and the single TRP mode herein refers to a transmission mode in which a signal is sent and/or received through a single TRP.

In embodiments of the disclosure, a multiple TRP scenario refers to a scenario where part of uplink and downlink information transmitted between the access network device and the terminal device is sent and/or received through multiple TRPs, while another part of the uplink and downlink information is sent and/or received through a single TRP.

In a multiple TRP scenario, the access network device can use a unified beam configuration framework to indicate multiple beams, and send a signal in a multiple TRP mode through the multiple beams. However, a beam of a signal in a single TRP mode is not yet been determined, which may lead to the inability to use appropriate transmitting and receiving beams for signal transmission and reception between the access network device and the terminal device, further result in low reliability of transmission of uplink and downlink signals.

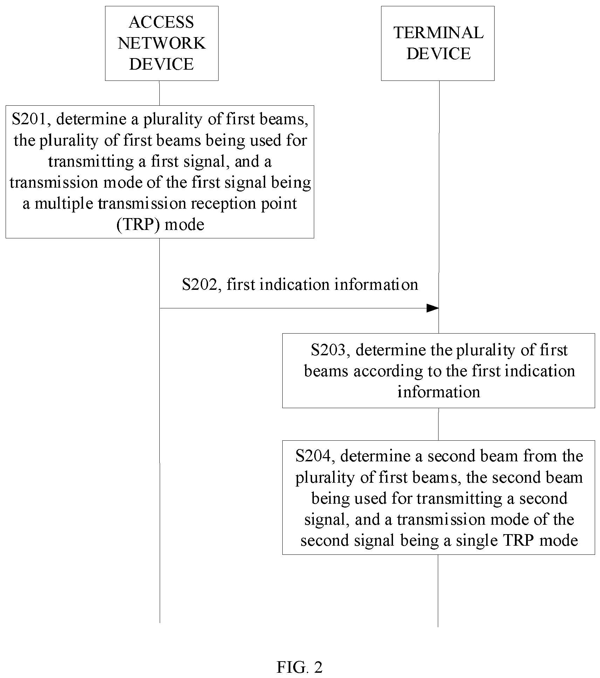

In order to determine a beam of a signal transmitted in a single TRP mode in a multiple TRP scenario, embodiments of the disclosure provide methods for beam determination, and the methods are applied to a multiple TRP scenario. As illustrated in FIG. 2, a method for beam determination includes, but is not limited to, the following operations.

S201, an access network device determines multiple first beams, where the multiple first beams are used for transmitting a first signal, and a transmission mode of the first signal is a multiple TRP mode.

The access network device can pre-configure a transmission mode of each signal. A signal whose transmission mode is the multiple TRP mode is the first signal, and a signal whose transmission mode is the single TRP mode is a second signal. For example, a transmission mode of a reference signal (RS) is pre-configured as the single TRP mode, and both a transmission mode of a data channel and a transmission mode of a control channel are pre-configured as the multiple TRP mode. The RS can be used for channel estimation or channel detection, and the RS may include an uplink RS and/or a downlink RS. The control channel can be used for carrying control information, and the control channel may include an uplink control channel and/or a downlink control channel, for example, a physical uplink control channel (PUCCH). The data channel can be used for carrying data information, and the data channel may include an uplink data channel and/or a downlink data channel, for example, a physical uplink shared channel (PUSCH).

S202, the access network device sends first indication information to a terminal device. Accordingly, the terminal device receives the first indication information from the access network device.

The first indication information is used for the terminal device to determine the multiple first beams.

In an embodiment, there is one piece of first indication information, in this case, the first indication information is used for indicating the above multiple first beams. For example, the first indication information contains indexes of the above multiple first beams. In another embodiment, the number of first indication information is the same as the number of the above multiple first beams, in this case, one piece of first indication information indicates one first beam, and first beams indicated by different first indication information are different.

S203, the terminal device determines the multiple first beams according to the first indication information.

After receiving the first indication information, the terminal device can determine multiple beams indicated by the first indication information as the multiple first beams for transmitting the first signal.

S204, the terminal device determines a second beam from the multiple first beams, where the second beam is used for transmitting a second signal, and a transmission mode of the second signal is a single TRP mode.

The multiple first beams include the second beam. Specifically, the terminal device may determine a beam corresponding to a first index among the multiple first beams as the second beam.

In an embodiment, the first index is an index of a preset position. Exemplarily, the first index is preset as an index of the 1st beam among the multiple first beams, and the 1st beam may refer to a beam whose index is the smallest among the multiple first beams. Alternatively, the first index is preset as an index of the last beam among the multiple first beams, and the last beam may refer to a beam whose index is the largest among the multiple first beams. Alternatively, the value of the first index may be preset as a predefined value. For example, the above multiple first beams are *N*beams, and the *N* beams correspond to *N* indexes. The predefined value may be *M*, where *M* is one of values of the *N* indexes, and *M* and *N* each are an integer. The value of *M* and the value of *N* each may be defined by the protocol.

In another embodiment, the terminal device determines a TRP index associated with the second signal, and determines a beam corresponding to the TRP index among the multiple first beams as the second beam. In this case, the first index is the TRP index associated with the second signal, where the TRP index is an index of a TRP for sending the second signal. In this case, the TRP index can be obtained from configuration information of the second signal. The index of the TRP for sending the second signal is configured in the configuration information of the second signal. Alternatively, the TRP index is an index of a TRP for sending downlink control information (DCI), and the DCI is used for scheduling the second signal. In this case, the TRP index can be obtained from configuration information of the DCI. The index of the TRP for sending the DCI is configured in the configuration information of the DCI. The TRP index associated with the second signal may be a high-level parameter *CORESETPoolIndex.*

By implementing embodiments of the disclosure, a beam for transmitting the second signal is determined from the multiple first beams determined according to the first indication information, so that the access network device and the terminal device can determine beams of the first signal to be transmitted by multiple TRPs and a beam of the second signal to be transmitted by a single TRP in a multiple TRP scenario. That is, the access network device and the terminal device have a consistent understanding of beam usage in the multiple TRP scenario, so that appropriate transmitting and receiving beams can be used for signal transmission and reception, which is beneficial to improving reliability of transmission of uplink and downlink signals.

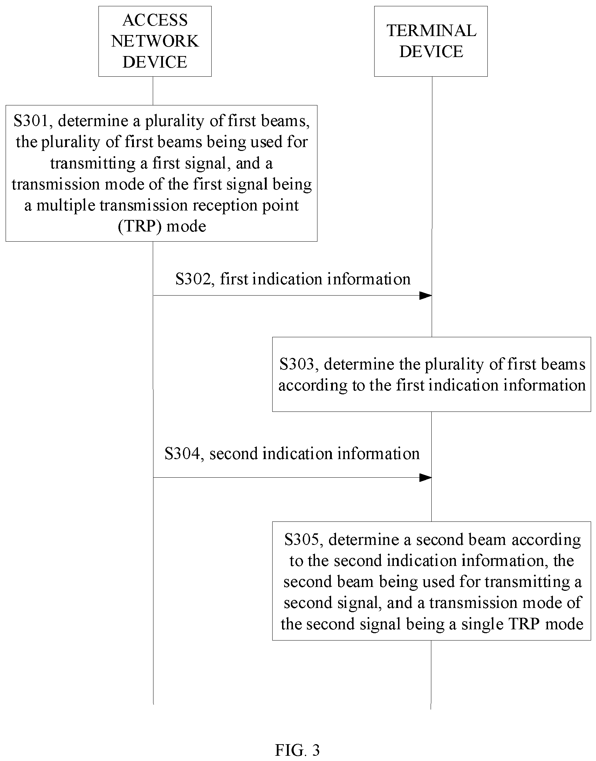

Referring to FIG. 3, FIG. 3 is a schematic flowchart illustrating another method for beam determination provided in embodiments of the disclosure. The method for determining the second beam in embodiments corresponding to FIG. 3 is different from the method for determining the second beam in embodiments corresponding to FIG. 2. As illustrated in FIG. 3, the method for beam determination includes, but is not limited to, the following operations.

S301, an access network device determines multiple first beams, where the multiple first beams are used for transmitting a first signal, and a transmission mode of the first signal is a multiple TRP mode.

S302, the access network device sends first indication information to a terminal device. Accordingly, the terminal device receives the first indication information from the access network device. Accordingly, the terminal device receives the first indication information from the access network device.

S303, the terminal device determines the multiple first beams according to the first indication information.

It is to be noted that, for execution details of the operations from S301 to S303, reference may be made to the specific description of the operations from S201 to S203 in embodiments corresponding to FIG. 2, which will not be repeated herein.

S304, the access network device sends second indication information to the terminal device. Accordingly, the terminal device receives the second indication information from the access network device.

The second indication information is used for determining a second beam. The second indication information may contain beam information of the second beam, for example, an index of the second beam.

S305, the terminal device determines the second beam according to the second indication information, where the second beam is used for transmitting a second signal, and a transmission mode of the second signal is a single TRP mode.

The second beam indicated by the second indication information may be included in the above multiple first beams, or may not be included in the above multiple first beams, which is not limited in embodiments of the disclosure. If the second beam is included in the above multiple first beams, the second indication information may contain an index of the second beam in the above multiple first beams. In this case, the terminal device can determine a beam corresponding to an index contained in the second indication information among the multiple first beams as the second beam.

By implementing embodiments of the disclosure, beams for transmitting the first signal are determined according to the first indication information, and a beam for transmitting the second signal is determined according to the second indication information, so that the access network device and the terminal device can determine beams of the first signal to be transmitted by multiple TRPs and a beam of the second signal to be transmitted by a single TRP in a multiple TRP scenario. That is, the access network device and the terminal device have a consistent understanding of beam usage in the multiple TRP scenario, so that appropriate transmitting and receiving beams can be used for signal transmission and reception, which is beneficial to improving reliability of transmission of uplink and downlink signals.

Based on the foregoing embodiments illustrated in FIG. 2 and FIG. 3, sending and receiving of the first signal relates to the following two scenarios.

The first scenario: the access network device sends a first signal through the multiple first beams, and accordingly, the terminal device receives the first signal through multiple third beams corresponding to the multiple first beams. The multiple third beams are determined by the terminal device according to the multiple first beams and a beam correspondence relationship, and the beam correspondence relationship includes a correspondence relationship between a beam used for signal transmission of the access network device and a beam used for signal transmission of the terminal device. Optionally, after the operations at S203 and S303, the terminal device further determines the multiple third beams by: obtaining the beam correspondence relationship, and determining, from the beam correspondence relationship, multiple beams that are used for signal transmission of the terminal device and are in one-to-one correspondence with the multiple first beams as the multiple third beams.

The beam correspondence relationship can be determined during beam training. During beam training, the terminal device can save a receiving beam corresponding to each reported transmitting beam. In the beam correspondence relationship, a beam used for signal transmission of the access network device includes a transmitting beam and a receiving beam, and a beam used for signal transmission of the terminal device includes a transmitting beam and a receiving beam. The beam correspondence relationship is shown in Table 1. Table 1 illustrates an exemplary case where both the access network device and the terminal device use the same direction of transmitting and receiving beams for signal transmission.

**Table 1 beam correspondence relationship**

| Beam used for signal transmission of the access network device | Beam used for signal transmission of the terminal device |
|---|---|
| Beam 1 | Beam 2 |
| Beam 3 | Beam 4 |

The beam correspondence relationship indicates appropriate transmitting and receiving beams for interaction between the access network device and the terminal device. As shown in Table 1, if a transmission mode of signal 1 is a single TRP mode, the access network device sends signal 1 on beam 1, and the terminal device receives signal 1 on beam 2, as such, a signal quality of signal 1 received by the terminal device can be better. As another example, if a transmission mode of signal 2 is a multiple TRP mode, the terminal device sends signal 2 on beam 2 and beam 4, and the access network device receives signal 2 on beam 1 and beam 3, as such, a signal quality of signal 2 received by the access network device can be better.

The second scenario: the terminal device sends a first signal through the multiple first beams determined at S201, and accordingly, the access network device receives the first signal through multiple fourth beams corresponding to the multiple first beams. The multiple fourth beams are multiple beams that correspond to the multiple first beams in the beam correspondence relationship and are used for signal transmission of the access network device.

In the first scenario, the above multiple first beams are used for the access network device to send the first signal. If the access network device uses the same direction of transmitting and receiving beams for signal transmission, in the first scenario, the multiple first beams can also be used for the access network device to receive a signal in a multiple TRP mode. In the second scenario, the above multiple first beams are used for the terminal device to send the first signal. If the terminal device uses the same direction of transmitting and receiving beams for signal transmission, in the second scenario, the multiple first beams can also be used for the terminal device to receive a signal in a multiple TRP mode.

It can be understood that, with reference to the two scenarios of sending and receiving of the first signal, sending and receiving of the second signal also relates to the following two scenarios.

Scenario 1: the access network device sends a second signal through the second beam, and accordingly, the terminal device receives the second signal through a fifth beam corresponding to the second beam. The fifth beam is determined by the terminal device according to the second beam and a beam correspondence relationship. Optionally, after the operations at S204 and S305, the terminal device further determines the fifth beam by: determining, from the beam correspondence relationship, a beam that corresponds to the second beam and is used for signal transmission of the terminal device as the fifth beam.

Scenario 2: the terminal device sends a second signal through the second beam, and accordingly, the access network device receives the second signal through a sixth beam corresponding to the second beam. The sixth beam is a beam that corresponds to the second beam in the beam correspondence relationship and is used for signal transmission of the access network device.

In scenario 1, the second beam is used for the access network device to send the second signal. If the access network device uses the same direction of transmitting and receiving beams for signal transmission, in scenario 1, the second beam can also be used for the access network device to receive a signal in a single TRP mode. In scenario 2, the second beam is used for the terminal device to send the second signal. If the terminal device uses the same direction of transmitting and receiving beams for signal transmission, in scenario 2, the second beam can also be used for the terminal device to receive a signal in a single TRP mode.

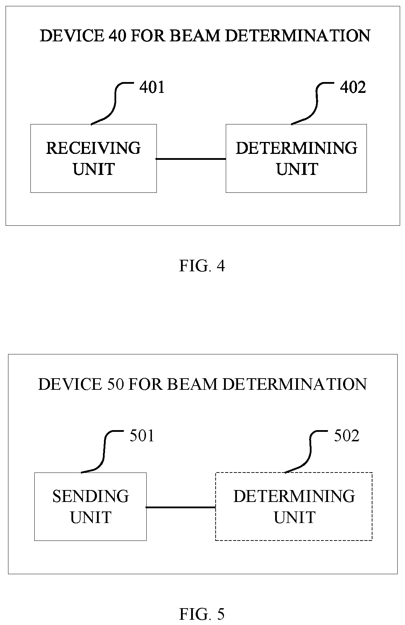

Referring to FIG. 4, FIG. 4 is a schematic structural diagram illustrating a device for beam determination provided in embodiments of the disclosure. As illustrated in FIG. 4, a device 40 for beam determination includes a receiving unit 401 and a determining unit 402.

In one design, the device 40 for beam determination is a terminal device, and is configured to achieve the functions of the terminal device of embodiments corresponding to FIG. 2. In this design, the receiving unit 401 and the determining unit 402 are respectively configured to perform the following operations. The receiving unit 401 is configured to receive first indication information from an access network device. The determining unit 402 is configured to determine multiple first beams according to the first indication information, and determine a second beam from the multiple first beams, where the multiple first beams are used for transmitting a first signal, and a transmission mode of the first signal is a multiple TRP mode; the second beam is used for transmitting a second signal, and a transmission mode of the second signal is a single TRP mode.

In an optional embodiment, the determining unit 402 configured to determine the second beam from the multiple first beams is specifically configured to: determine a beam corresponding to an index of a preset position among the multiple first beams as the second beam.

In an optional embodiment, the determining unit 402 configured to determine the second beam from the multiple first beams is specifically configured to: determine a TRP index associated with the second signal, and determine a beam corresponding to the TRP index among the multiple first beams as the second beam.

In an optional embodiment, the TRP index is an index of a TRP for sending the second signal, or the TRP index is an index of a TRP for sending a downlink control signal, where the downlink control signal is used for scheduling the second signal.

In another design, the device 40 for beam determination is a terminal device, and is configured to achieve the functions of the terminal device of embodiments corresponding to FIG.3. In this design, the receiving unit 401 and the determining unit 402 are respectively configured to perform the following operations. The receiving unit 401 is configured to receive first indication information from an access network device. The determining unit 402 is configured to determine multiple first beams according to the first indication information, where the multiple first beams are used for transmitting a first signal, and a transmission mode of the first signal is a multiple TRP mode. The receiving unit 401 is further configured to receive second indication information from the access network device. The determining unit 402 is further configured to determine a second beam according to the second indication information, where the second beam is used for transmitting a second signal, and a transmission mode of the second signal is a single TRP mode.

Referring to FIG. 5, FIG. 5 is a schematic structural diagram illustrating another device for beam determination provided in embodiments of the disclosure. As illustrated in FIG. 5, a device 50 for beam determination includes a sending unit 501. Optionally, the device 50 for beam determination further includes a determining unit 502.

In one design, the device 50 for beam determination is an access network device, and is configured to achieve the functions of the access network device of embodiments corresponding to FIG. 2. In this design, the sending unit 501 and the determining unit 502 are respectively configured to perform the following operations. The determining unit 502 is configured to determine multiple first beams, where the multiple first beams are used for transmitting a first signal, and a transmission mode of the first signal is a multiple TRP mode. The sending unit 501 is configured to send first indication information to a terminal device, where the first indication information is used for determining the multiple first beams, the multiple first beams include a second beam, the second beam is used for transmitting a second signal, and a transmission mode of the second signal is a single TRP mode.

In an optional embodiment, the second beam is a beam corresponding to an index of a preset position among the multiple first beams.

In an optional embodiment, the second beam is a beam corresponding to a TRP index among the multiple first beams, and the TRP index is associated with the second signal.

In an optional embodiment, the TRP index is an index of a TRP for sending the second signal, or the TRP index is an index of a TRP for sending a downlink control signal, where the downlink control signal is used for scheduling the second signal.

In another design, the device 50 for beam determination is an access network device, and is configured to achieve the functions of the access network device of embodiments corresponding to FIG. 3. In this design, the sending unit 501 is configured to perform the following operations. The sending unit 501 is configured to send first indication information to a terminal device, where the first indication information is used for determining multiple first beams, the multiple first beams are used for transmitting a first signal, and a transmission mode of the first signal is a multiple TRP mode. The sending unit 501 is further configured to send second indication information to the terminal device, where the second indication information is used for determining a second beam, the second beam is used for transmitting a second signal, and a transmission mode of the second signal is a single TRP mode.

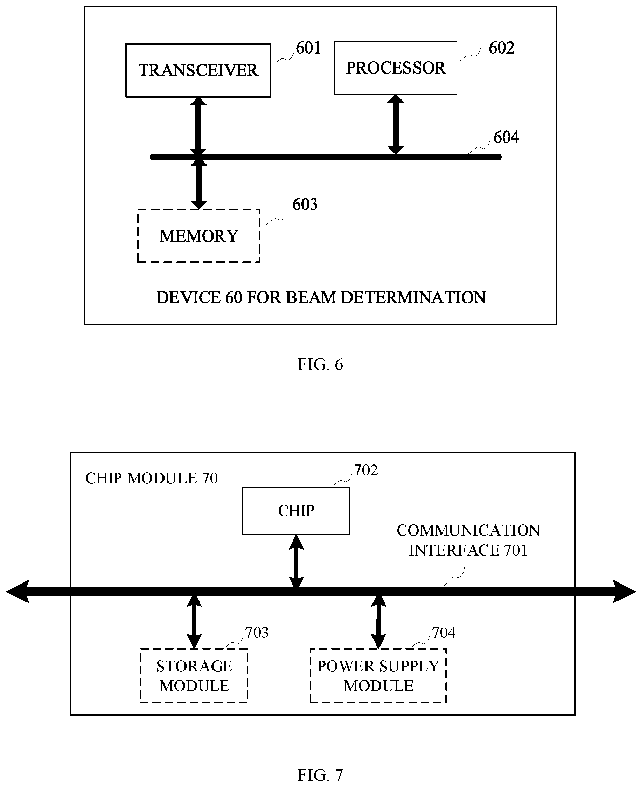

Referring to FIG. 6, FIG. 6 is another device 60 for beam determination provided in embodiments of the disclosure. The device 60 can be configured to achieve the functions of the terminal device of the foregoing method embodiments, or to achieve the functions of the access network device of the foregoing method embodiments. The device 60 for beam determination may include a transceiver 601 and a processor 602. Optionally, the device for beam determination further includes a memory 603. The transceiver 601, the processor 602, and the memory 603 are connected to each other via a bus 604 or other means. The bus is represented by a thick line in FIG. 6. The connection between other components is merely illustrative and not limited herein. The bus may include an address bus, a data bus, a control bus, etc. For ease of representation, only one thick line is used in FIG. 6, but it does not mean that there is only one bus or one type of bus.

The coupling of implementations of the disclosure may be indirect coupling or communication connection between devices, units, or modules, may be in the form of electrical, mechanical, etc., and is used for information exchange between devices, units, or modules. The specific connection medium between the transceiver 601, the processor 602, and the memory 603 is not limited in embodiments of the disclosure.

The memory 603 may include a read-only memory (ROM) and a random access memory (RAM), and is configured to provide instructions and data for the processor 602. A portion of the memory 603 may also include a non-transitory RAM.

The processor 602 may be a central processing unit (CPU), or other general-purpose processors, digital signal processors (DSP), application specific integrated circuits (ASIC), field-programmable gate arrays (FPGA) or other programmable logic devices, discrete gate or transistor logic devices, discrete hardware components, etc. The general-purpose processor may be a microprocessor. Optionally, the processor 602 may also be any conventional processor, etc.

In an example, when the terminal device is in a form illustrated in FIG. 6, the processor in FIG. 6 can be configured to execute the operations executed by the terminal device in any of the foregoing method embodiments.

In an example, when the access network device is in a form illustrated in FIG. 6, the processor in FIG. 6 can be configured to execute the operations executed by the access network device in any of the foregoing method embodiments.

In an optional embodiment, the memory 603 is used to store program instructions; the processor 602 is configured to call the program instructions stored in the memory 603 to execute the operations executed by the terminal device and the operations executed by the access network device in the corresponding embodiments of FIG. 2 to FIG. 3. Specifically, the functions/implementation processes of the receiving unit and the determining unit in FIG. 4 can be implemented by the processor 602 in FIG. 6 to call computer executable instructions stored in the memory 603; alternatively, the functions/implementation processes of the determining unit in FIG. 4 can be implemented by the processor 602 in FIG. 6 to call computer executable instructions stored in the memory 603, and the functions/implementation processes of the receiving unit in FIG. 4 can be implemented by the transceiver 601 in FIG. 6. The functions/implementation processes of the determining unit and the sending unit in FIG. 5 can be implemented by the processor 602 in FIG. 6 to call computer executable instructions stored in the memory 603; alternatively, the function/implementation processes of the determining unit in FIG. 5 may be implemented by the processor 602 in FIG. 6 to call computer executable instructions stored in the memory 603, and the function/implementation processes of the sending unit in FIG. 5 may be implemented by the transceiver 601 in FIG. 6.

In embodiments of the disclosure, the method provided in the embodiments of the disclosure can be implemented by running computer programs (including program codes) capable of executing each operation involved in said method on a general computing device such as a computer including a processing element (e.g., a CPU, a RAM, a ROM) and a storage element. The computer programs can be recorded on a computer-readable recording medium for example, and are loaded into the above computing device through the computer-readable recording medium and run therein.

Based on the same inventive concept, the principles of technical problem solving and advantageous effects of the device 60 for beam determination in embodiments of the disclosure are similar to the principles of technical problem solving and advantageous effects of the terminal device and the access network device in the method embodiments of the disclosure, and thus, reference can be made to the principles and advantageous effects of the method embodiments, for the sake of concise description, which will not be repeated herein.

The device for beam determination (e.g., the device 40 for beam determination, the device 50 for beam determination, the device 60 for beam determination) may be, for example, a chip or a chip module.

Embodiments of the disclosure further provide a chip. The chip is configured to execute the relevant operations of the terminal device and the relevant operations of the access network device in the foregoing method embodiments.

For the case where the chip is configured to achieve the functions of the terminal device in the embodiments corresponding to FIG. 2: the chip is configured to receive first indication information from an access network device; determine multiple first beams according to the first indication information; and determine a second beam from the multiple first beams; where the multiple first beams are used for transmitting a first signal, and a transmission mode of the first signal is a multiple TRP mode; where the second beam is used for transmitting a second signal, and a transmission mode of the second signal is a single TRP mode.

In an optional embodiment, the chip configured to determine the second beam from the multiple first beams is specifically configured to: determine a beam corresponding to an index of a preset position among the multiple first beams as the second beam.

In an optional embodiment, the chip configured to determine the second beam from the multiple first beams is specifically configured to: determine a TRP index associated with the second signal; and determine a beam corresponding to the TRP index among the multiple first beams as the second beam.

In an optional embodiment, the TRP index is an index of a TRP for sending the second signal; or the TRP index is an index of a TRP for sending a downlink control signal, and the downlink control signal is used for scheduling the second signal.

Specifically, in this case, the operations performed by the chip can refer to the introduction of the terminal device in the above embodiments corresponding to FIG. 2.

For the case where the chip is configured to achieve the functions of the access network device in the embodiments corresponding to FIG. 2: the chip is configured to determine multiple first beams, and send first indication information to a terminal device; where the first indication information is used for determining the multiple first beams; where the multiple first beams are used for transmitting a first signal, and a transmission mode of the first signal is a multiple TRP mode; where the multiple first beams include a second beam, the second beam is used for transmitting a second signal, and a transmission mode of the second signal is a single TRP mode.

In an optional embodiment, the second beam is a beam corresponding to an index of a preset position among the multiple first beams.

In an optional embodiment, the second beam is a beam corresponding to a TRP index among the multiple first beams, and the TRP index is associated with the second signal.

In an optional embodiment, the TRP index is an index of a TRP for sending the second signal; or the TRP index is an index of a TRP for sending a downlink control signal, and the downlink control signal is used for scheduling the second signal.

Specifically, in this case, the operations performed by the chip can refer to the introduction of the access network device in the above embodiments corresponding to FIG. 2.

For the case where the chip is configured to achieve the functions of the terminal device in the embodiments corresponding to FIG. 3: the chip is configured to receive first indication information from an access network device, determine multiple first beams according to the first indication information, receive second indication information from the access network device, and determine a second beam according to the second indication information; where the multiple first beams are used for transmitting a first signal, and a transmission mode of the first signal is a multiple TRP mode; where the second beam is used for transmitting a second signal, and a transmission mode of the second signal is a single TRP mode.

Specifically, in this case, the operations performed by the chip can refer to the introduction of the terminal device in the above embodiments corresponding to FIG. 3.

For the case where the chip is configured to achieve the functions of the access network device in the embodiments corresponding to FIG. 3: the chip is configured to send first indication information to a terminal device, the first indication information being used for determining multiple first beams; and send second indication information to the terminal device, the second indication information being used for determining a second beam; where the multiple first beams are used for transmitting a first signal, and a transmission mode of the first signal is a multiple TRP mode; where the second beam is used for transmitting a second signal, and a transmission mode of the second signal is a single TRP mode.

Specifically, in this case, the operations performed by the chip may refer to the introduction of the access network device in the above embodiments corresponding to FIG. 3.

In a possible embodiment, the chip includes at least one processor, at least one first memory, and at least one second memory. The at least one first memory and the at least one processor are interconnected via lines, and the at least one first memory stores instructions. The at least one second memory and the at least one processor are interconnected via lines, and the at least one second memory stores data that needs to be stored in the foregoing method embodiments.

For each device or product applied to or integrated in the chip, each module contained therein may be implemented in the form of hardware such as circuits; alternatively, at least some modules contained therein may be implemented in the form of software programs that run on a processor integrated inside the chip, and the remaining modules (if any) may be implemented in the form of hardware such as circuits.

Referring to FIG. 7, FIG. 7 is a schematic structural diagram illustrating a chip module provided in embodiments of the disclosure. A chip module 70 is configured to execute the relevant operations of the terminal device and the relevant operations of the access network device in the foregoing method embodiments. The chip module 70 includes a communication interface 701 and a chip 702. The communication interface is used for internal communication of the chip module, or for the chip module to communicate with an external device. The chip is configured to achieve the functions of the terminal device and the functions of the access network device in the embodiments of the disclosure, and reference may be made to the corresponding embodiments of FIG. 2 to FIG. 3 for details. Optionally, the chip module 70 may further include a storage module 703 and a power supply module 704. The storage module 703 is used to store data and instructions. The power supply module 704 is used to provide power for the chip module.

For each device or product applied to or integrated in the chip module, each module contained therein may be implemented by hardware such as circuits, and different modules may be located in the same component of the chip module (e.g., a chip, circuit module) or located in different components. Alternatively, at least some modules contained therein may be implemented by software programs that run on a processor integrated inside the chip module, and the remaining modules (if any) may be implemented by hardware such as circuits.

Embodiments of the disclosure further provide a computer-readable storage medium. The computer-readable storage medium stores one or more instructions. The one or more instructions are loaded by a processor and operable to execute the method of the foregoing method embodiments.

Embodiments of the disclosure further provide a computer program product. The computer program product includes computer programs or instructions which, when run on a computer, are operable with the computer to execute the method of the foregoing method embodiments.

Embodiments of the disclosure further provide a system for beam determination. The system for beam determination includes the terminal device and the access network device in the embodiments corresponding to FIG. 2, or the system for beam determination includes the terminal device and the access network device in the embodiments corresponding to FIG. 3.

The modules/units included in each device and product described in the foregoing embodiments may be software modules/units or hardware modules/units, or may be partially software modules/units and partially hardware modules/units. For example, for each device and product applied to or integrated in the chip, the modules/units contained therein may all be implemented in the form of hardware such as circuits, or at least some of the modules/units contained therein may be implemented in the form of software programs run on a processor integrated inside the chip, and the remaining modules/units (if any) may be implemented in the form of hardware such as circuits; for each device and product applied to or integrated in the chip module, the modules/units contained therein may all be implemented in the form of hardware such as circuits, and different modules/units may be located in the same component (e.g., a chip, a circuit module) of the chip module or located in different components of the chip module, or at least some of the modules/units contained therein may be implemented in the form of software programs run on a processor integrated inside the chip module, and the remaining modules/units (if any) may be implemented in the form of hardware such as circuits; for each device or product applied to or integrated in a terminal, the modules/units contained therein may all be implemented in the form of hardware such as circuits, and different modules/units may be located in the same component (e.g., a chip, a circuit module) of the terminal or located in different components of the terminal, or at least some of the modules/units contained therein may be implemented in the form of software programs run on a processor integrated inside the terminal, and the remaining modules/units (if any) may be implemented in the form of hardware such as circuits.

It is to be noted that, for the sake of simplicity, the foregoing method embodiments are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the embodiments described in the specification are exemplary embodiments and the actions and modules involved are not necessarily essential to the disclosure.

The operations of the method of embodiments of the disclosure may be adjusted in terms of execution order, may be combined, or may be deleted according to actual needs.

The modules of the device of embodiments of the disclosure may be merged, divided, or deleted according to actual needs.

Those skilled in the art can understand that, all or part of the operations of the method of the above embodiments may be completed by instructing the relevant hardware through a program. The program may be stored in a computer-readable storage medium, and the readable storage medium may include a flash drive, a ROM, a RAM, a disk or an optical disk, etc.

The above only discloses exemplary embodiments of the disclosure, which is only part of embodiments of the disclosure, and should not constitute a limitation on the protection scope of the disclosure.

## Claims

1. A method for beam determination, applied to a terminal device and comprising:
receiving first indication information from an access network device;
determining a plurality of first beams according to the first indication information, the plurality of first beams being used for transmitting a first signal, and a transmission mode of the first signal being a multiple transmission reception point, TRP, mode; and
determining a second beam from the plurality of first beams, the second beam being used for transmitting a second signal, and a transmission mode of the second signal being a single TRP mode.

2. The method of claim 1, wherein determining the second beam from the plurality of first beams comprises:
determining a beam corresponding to an index of a preset position among the plurality of first beams as the second beam.

3. The method of claim 1, wherein determining the second beam from the plurality of first beams comprises:
determining a TRP index associated with the second signal; and
determining a beam corresponding to the TRP index among the plurality of first beams as the second beam.

4. The method of claim 3, wherein
the TRP index is an index of a TRP for sending the second signal; or
the TRP index is an index of a TRP for sending a downlink control signal, and the downlink control signal is used for scheduling the second signal.

5. A method for beam determination, applied to an access network device and comprising:
determining a plurality of first beams, the plurality of first beams being used for transmitting a first signal, and a transmission mode of the first signal being a multiple transmission reception point, TRP, mode; and
sending first indication information to a terminal device, the first indication information being used for determining the plurality of first beams, the plurality of first beams comprising a second beam, the second beam being used for transmitting a second signal, and a transmission mode of the second signal being a single TRP mode.

6. The method of claim 5, wherein the second beam is a beam corresponding to an index of a preset position among the plurality of first beams.

7. The method of claim 5, wherein the second beam is a beam corresponding to a TRP index among the plurality of first beams, and the TRP index is associated with the second signal.

8. The method of claim 7, wherein
the TRP index is an index of a TRP for sending the second signal; or
the TRP index is an index of a TRP for sending a downlink control signal, and the downlink control signal is used for scheduling the second signal.

9. A method for beam determination, applied to a terminal device and comprising:
receiving first indication information from an access network device;
determining a plurality of first beams according to the first indication information, the plurality of first beams being used for transmitting a first signal, and a transmission mode of the first signal being a multiple transmission reception point, TRP, mode;
receiving second indication information from the access network device; and
determining a second beam according to the second indication information, the second beam being used for transmitting a second signal, and a transmission mode of the second signal being a single TRP mode.

10. A method for beam determination, applied to an access network device and comprising:
sending first indication information to a terminal device, the first indication information being used for determining a plurality of first beams, the plurality of first beams being used for transmitting a first signal, and a transmission mode of the first signal being a multiple transmission reception point, TRP, mode; and
sending second indication information to the terminal device, the second indication information being used for determining a second beam, the second beam being used for transmitting a second signal, and a transmission mode of the second signal being a single TRP mode.

11. A device for beam determination, comprising a receiving unit and a determining unit, wherein
the receiving unit is configured to receive first indication information from an access network device;
the determining unit is configured to determine a plurality of first beams according to the first indication information, the plurality of first beams being used for transmitting a first signal, and a transmission mode of the first signal being a multiple transmission reception point, TRP, mode; and
the determining unit is further configured to determine a second beam from the plurality of first beams, the second beam being used for transmitting a second signal, and a transmission mode of the second signal being a single TRP mode.

12. A device for beam determination, comprising a determining unit and a sending unit, wherein
the determining unit is configured to determine a plurality of first beams, the plurality of first beams being used for transmitting a first signal, and a transmission mode of the first signal being a multiple transmission reception point, TRP, mode; and
the sending unit is configured to send first indication information to a terminal device, the first indication information being used for determining the plurality of first beams, the plurality of first beams comprising a second beam, the second beam being used for transmitting a second signal, and a transmission mode of the second signal being a single TRP mode.

13. A device for beam determination, comprising a receiving unit and a determining unit, wherein
the receiving unit is configured to receive first indication information from an access network device;
the determining unit is configured to determine a plurality of first beams according to the first indication information, the plurality of first beams being used for transmitting a first signal, and a transmission mode of the first signal being a multiple transmission reception point, TRP, mode;
the receiving unit is further configured to receive second indication information from the access network device; and
the determining unit is further configured to determine a second beam according to the second indication information, the second beam being used for transmitting a second signal, and a transmission mode of the second signal being a single TRP mode.

14. A device for beam determination, comprising a sending unit, wherein
the sending unit is configured to send first indication information to a terminal device, the first indication information being used for determining a plurality of first beams, the plurality of first beams being used for transmitting a first signal, and a transmission mode of the first signal being a multiple transmission reception point, TRP, mode; and
the sending unit is further configured to send second indication information to the terminal device, the second indication information being used for determining a second beam, the second beam being used for transmitting a second signal, and a transmission mode of the second signal being a single TRP mode.

15. A device for beam determination, comprising a processor configured to execute the method of any of claims 1 to 10.

16. A chip, being configured to:
receive first indication information from an access network device;
determine a plurality of first beams according to the first indication information, the plurality of first beams being used for transmitting a first signal, and a transmission mode of the first signal being a multiple transmission reception point, TRP, mode; and
determine a second beam from the plurality of first beams, the second beam being used for transmitting a second signal, and a transmission mode of the second signal being a single TRP mode.

17. A chip module, comprising a communication interface and a chip, wherein
the communication interface is configured for internal communication of the chip module, or for the chip module to communicate with an external device; and
the chip is configured to: receive first indication information from an access network device; determine a plurality of first beams according to the first indication information, the plurality of first beams being used for transmitting a first signal, and a transmission mode of the first signal being a multiple transmission reception point, TRP, mode; and determine a second beam from the plurality of first beams, the second beam being used for transmitting a second signal, and a transmission mode of the second signal being a single TRP mode.

18. A chip, being configured to:
determine a plurality of first beams, the plurality of first beams being used for transmitting a first signal, and a transmission mode of the first signal being a multiple transmission reception point, TRP, mode; and
send first indication information to a terminal device, the first indication information being used for determining the plurality of first beams, the plurality of first beams comprising a second beam, the second beam being used for transmitting a second signal, and a transmission mode of the second signal being a single TRP mode.

19. A chip module, comprising a communication interface and a chip, wherein
the communication interface is configured for internal communication of the chip module, or for the chip module to communicate with an external device; and
the chip is configured to: determine a plurality of first beams, the plurality of first beams being used for transmitting a first signal, and a transmission mode of the first signal being a multiple transmission reception point, TRP, mode; and send first indication information to a terminal device, the first indication information being used for determining the plurality of first beams, the plurality of first beams comprising a second beam, the second beam being used for transmitting a second signal, and a transmission mode of the second signal being a single TRP mode.

20. A chip, being configured to:
receive first indication information from an access network device;
determine a plurality of first beams according to the first indication information, the plurality of first beams being used for transmitting a first signal, and a transmission mode of the first signal being a multiple transmission reception point, TRP, mode;
receive second indication information from the access network device; and
determine a second beam according to the second indication information, the second beam being used for transmitting a second signal, and a transmission mode of the second signal being a single TRP mode.

21. A chip module, comprising a communication interface and a chip, wherein
the communication interface is configured for internal communication of the chip module, or for the chip module to communicate with an external device; and
the chip is configured to: receive first indication information from an access network device; determine a plurality of first beams according to the first indication information, the plurality of first beams being used for transmitting a first signal, and a transmission mode of the first signal being a multiple transmission reception point, TRP, mode; receive second indication information from the access network device; and determine a second beam according to the second indication information, the second beam being used for transmitting a second signal, and a transmission mode of the second signal being a single TRP mode.

22. A chip, being configured to:
send first indication information to a terminal device, the first indication information being used for determining a plurality of first beams, the plurality of first beams being used for transmitting a first signal, and a transmission mode of the first signal being a multiple transmission reception point, TRP, mode; and
send second indication information to the terminal device, the second indication information being used for determining a second beam, the second beam being used for transmitting a second signal, and a transmission mode of the second signal being a single TRP mode.

23. A chip module, comprising a communication interface and a chip, wherein
the communication interface is configured for internal communication of the chip module, or for the chip module to communicate with an external device; and
the chip is configured to: send first indication information to a terminal device, the first indication information being used for determining a plurality of first beams, the plurality of first beams being used for transmitting a first signal, and a transmission mode of the first signal being a multiple transmission reception point, TRP, mode; and send second indication information to the terminal device, the second indication information being used for determining a second beam, the second beam being used for transmitting a second signal, and a transmission mode of the second signal being a single TRP mode.
